# EUROPEAN PATENT APPLICATION

(11) **EP 1 298 955 A1**
(43) Date of publication of application: **02.04.2003**
(21) Application number: 01929664.9
(22) Date of filing: 09.05.2001
(51) Int. Cl.: H04Q 9/00, H04Q 7/20, H04L 9/00, H04L 9/32, G08C 17/02

(54) **REMOTE CONTROL SYSTEM FOR ACCESS MANAGEMENT AND CONTROL**

(30) Priority: 09.05.2000 ES 200001169
(71) Applicant: Domotica General, S.L., 42003 Soria (ES)
(72) Inventor: CASTRO ESTEBAN, Francisco Javier, E-50005 Zaragoza (ES)
(74) Representative: Ungria Lopez, Javier
(86) International application number: ES0100179
(87) International publication number: WO01089259

(57) **Abstract**

The invention relates to a remote control system comprising one or more controls (1) communicating with one or more central receiver units (2, 3, 4) that control the opening/closing of given doors or accesses. Each control (1) has a single push button (5), wherein said control (1) can control or be controlled with respect to any given number of central units (2, 3, 4) according to pre-established modes depending on the number and duration of pulses and/or the distance between the control (1) and the central units (2, 3, 4). Communication between controls (1) and central units (2, 3, 4) is two-way and includes a secrel code by means of an algorithm (RPDA) specifically developed for said system and consisting of a previously coded preamble heading all messages within the communication and requiring a satisfactory response at the end of the message flow.

## Description

### OBJECT OF THE INVENTION

This invention, as stated in this descriptive report, refers to a remote control system for the management and control of accesses, the purpose of which is to provide a system that is particularly applicable to the remote opening and closing of garage, dwelling and vehicle doors, offering advantages such as: ease of installation as there is no cable form between the main elements of the system; great security regarding unauthorised access as bi-directional communication with secret encoding is employed between the controls and the main receivers; ease in including and removing different controls even in the most remote accesses ("DOMAIN" mode) of the location of the main system; the possibility of hands free modes for the control device that will allow the automatic closing of the access as the control moves away from this ("PROXY" mode) and the automatic opening of the access as the control device moves nearer to it ("SCAN" mode), together with acoustic warnings for certain situations such as door closed, door opening, the mode in which the control device is set and the low state of the control device battery; ease of use when using control devices with a single pushbutton that allows different functions to be exercised by means of the duration and number of times the device is pressed; where in normal use mode it is possible to press the control device only once to act on the opening device that is nearest and where in this manner accesses are acted upon singly according to their relative closeness or distance away; this procedure being useful in all cases independently of the number of accesses in the same range, where the establishment of channels to differentiate between the accesses is not necessary and neither is it necessary, therefore, to include further pushbuttons in the control devices associated with these channels making their use considerably easier, above all in cases in which there are various accesses in the same relatively short range, as in the case of a single family dwelling, offices, doors for pedestrians, etc.

### BACKGROUND TO THE INVENTION

Encoded protection systems are common in remote control equipment, for example, for motor vehicles and other cases such as garage doors to allow authorised access. In these, the corresponding remote control unit starts bi-directional communication to exchange coded information that is evaluated in order to agree and authorise use; although bi-directional methods that also exchange data and information for various encoded functions, such as in the present invention, are not known.

In the majority of cases, systems for remote control and access for opening doors to garages and domestic environment require security levels that are not easy to achieve because of the necessary set-up for this and the price and, particularly, because of the difficulty in using them considering the services that they provide.

In order to increase the security of these systems, communication technologies have been developed in the past few years between transmitter-control and receiver-main host that use fairly well-developed encoding systems with the object of increasing the security of the system particularly regarding well-known thieves who have frequency scanners capable of breaking into the system.

The systems used at present for protecting coding in the access control market are the random generating of a number or the use of variable codes.

Various patents exist that have systems using a variable code as in the case of the patent document W0963(70)63 that uses one fixed code and another variable one via an encrypted signal.

The truth is that the advantages of bi-directional communication from the point of view of security are obvious when compared with other techniques used and, more specifically, systems with a variable or rolling code generating random numbers that are used today in the access control market, whose technical status is well known, as can be seen from patent document W0963(70)63 and many others. The rolling code has the disadvantage that it can be broken by scanning the remote control signal without it reaching the authorised receiver (this is possible by making use of a lapse on the part of the user to thus get to know the newly changed code), in such a way that it can be acted on with the correct code expected.

Another important question and object of the invention refers to the improvement obtained with respect to present techniques for acting on different opening devices in the same range, consisting of the use of channels and different pushbuttons in the remote control associated with these channels in order to discern the access to be acted upon. In these cases, transmission by the remote control when acting on a particular opening device has a relatively high range and the main host on which it acts is discerned by pressing the control button associated with the transmitting channel corresponding to this previously established main host. This method used has disadvantages due to the physical limitation on the space available in a remote control unit of appropriate size as well as the need to identify the pushbutton for a particular access; but it has particular disadvantages in cases of various doors within the same range due to the fact that the number of doors within this same range may be too high in relation to the technique used, as can occur in cases of a single family dwelling or in situations of pedestrian access as in offices where it is very probable that the number of accesses will be too high, within the range of the present systems, due to the fact that a method of propagating the signal and not one of selecting the main host on which to act is used, which has negative results for cases in which the accesses are within a relatively short range. This is an important reason for explaining the non-existence of remote control systems such as those used for remote accesses in garages, etc. that may also be used for pedestrian access.

As can be seen in the patent document W0963(70)63, bi-directional communication is used with the exchange of secret information, where a method for a change of coding between the control and main host based on bi-directional communication and a known algorithm are used to great advantage. The limitations of this invention are obvious from the point of view of the pushbuttons on the remote control as these are configured according to communications channels related to each opening device and there has to be so many opening devices in the same range that it would be problematical in the case of various accesses, for example pedestrian, that are relatively close.

On the other hand, it is known that a user can be included and removed in the present access control and management systems and that in the majority of cases this requires an additional programmer. In other cases, handling by the user or the installer is necessary and this is complicated and costly. On other occasions more sophisticated systems are available that include a PC and software that optimise this task but the set-up necessary is not always appropriate. The above is also applicable to other functions that require a good access management and control system. Other possibilities, such as the printing of data in the aforementioned present systems, are difficult to have as they require an interface, software and an additional printer in the majority of cases.

In general, the main inconveniences of the known systems for remote control of accesses are that their security is not as good as could be wished and that the corresponding remote controls have various pushbuttons. These cannot be included in systems with greater services and do not permit "hands free" modes of action.

### DESCRIPTION OF THE INVENTION

In order to achieve the objectives and avoid the inconveniences indicated in the above sections, the invention consists of a remote control system for the management and control of accesses that is particularly applicable to the remote opening and closing of garage, dwelling and automobile doors. The system has one or more controls that communicate (preferably in a cordless manner) with one or more main hosts that govern the opening/closing of the corresponding doors or accesses. Each control has a single push button so that, according to the number and/or times that the button is pressed and/or the proximity of the remote control to the main hosts, the remote control can control and be controlled with respect to the number of receiving hosts, according to the pre-established modes. Communication between each remote control and the receiving host is a bi-directional data communication that includes a secret code by means of an encoding algorithm that allows useful information to be transmitted for various functions, this secret code being stored in both the remote controls and the receiving hosts. Thus, authorisation for use in the system and the inviolability of the aforementioned communication are insured by means of the said algorithm. This algorithm is a Reference Positioning Dynamic Algorithm, called an RPDA, specifically developed for this system, that allows information packages of any size to be protected and which consists of a pre-coded preface that heads all the communication messages and requires a satisfactory response from the communicating element at the end of the entire message flow.

The aforementioned bi-directional communication will preferably be made via radio and may consist of a question-answer and evaluation process via an exchange of passwords, in which the control receives a coding from the receiver host and evaluates it according to the aforementioned algorithm; sending the corresponding evaluation to the said host, producing a verification in this host as well as receiving information for established functions; so that access will be permitted or refused according to whether this verification is valid or not; which ensures that the system will only be used by authorised persons.

The ease of use and interest in using the remote control are clear as only one action is now basically permitted with the pushbutton, capable of being discerned by the receiver host that will act, by establishing the energy level for the transmission according to the distance for acting on the different opening devices, independently of the number of these within the same range; where, by means of operating thus, the remote control transmits the signal for acting on all the receivers within its range and, once this signal is received, sends encoded information on its energy level and identification, by means of which the control determines the device on which it has to act determined by the maximum energy level or minimum distance for acting. This exchange of energy information precedes every bi-directional communication for acting on a opening device between the control and the receiver host of this opening device.

There also exists an action mode derived from a control to be activated by the domain or deferred action mode, by means of loading the access authorisation by domain mode previously executed in a receiver host in the remote control, with pre-established authorisations on the host activated by this mode.

Furthermore, two automatic modes exist for activating the opening device called SCAN mode and PROXY mode; the latter is particularly applicable to vehicle access.

The receiver hosts are of three types: a first type called main-host, a second type called mirror-host and a third type called vehicle-host; those in the first type being main hosts that carry out the control, management and governing of accesses and the control and management of the remote controls autonomously and in a centralised manner; these main hosts also exchange information bi-directionally and generally in a cordless manner, with hosts of the second type; while these second type hosts are mirror or auxiliary hosts that can govern certain accesses but through the control and management of a host of the first type, the third type hosts being hosts whose governed element corresponds to accessing a vehicle. While the controls are of a single type, they are called clever-control and are likely to be used with the three aforementioned types of host, they can be personalised and have a key-ring type configuration.

According to another form of the invention, the system has an option that includes a visual control-host, which has, at the very least, a PC type computer with visual management software for accesses and a specific interface unit for this application called RPDA-DATA-LINK; this control-host functions in a similar manner to that of the main-host with the exception that it allows visual control of all accesses and that it cannot govern accesses directly, these accesses being governed in this option in the system by respective mirror-hosts that communicate bi-directionally with the control-host via the aforementioned interface, as well as communicating bi-directionally with the corresponding clever-controls. This system option is particularly suitable when great centralisation in access management is required such as in the case of access management in offices, hotels and others.

These receiver hosts and controls allow simple and reliable control and management of accesses, making it possible for inclusion or removal of any control to be performed directly or by means of the mode called DOMAIN mode or remote inclusion that consists of leaving certain controls available for accessing a special access at a distance from where the system is located, or not, with user context associations such as the time zones permitted/forbidden for each remote control, voice messaging, automatic data printing, warnings on data, acoustic warnings on access status, the status of the control battery and the action mode for the remote control, as well as a privacy condition consisting of optionally disabling all the remaining remote controls for a certain access once the said control has accessed this particular access; with means of acting in hands free mode for so-called SCAN mode controls and consisting of the fact that once this mode has been activated and/or programmed by means of pressing the remote control, the corresponding access opens automatically when physically approaching this access with the remote control; which is particularly applicable to entries in which the user has his/her hands occupied with; with moreover, the means for acting in another hands free mode for the controls called PROXY mode consisting of the fact that once this mode has been activated and/or programmed by means of pressing the control, the corresponding access closes automatically when physically moving the control away from this access, which is particularly applicable to user automobile exits to ensure that this exit is closed when he/she leaves it.

Communication between the clever-control and the main-host for acting on an opening device, includes recognition, with previous verification of the operating mode, of this communication, which contains a clever-control serial number, its operating mode and the status of the battery, and as a first step recognising whether the clever-control is activated in the main-host or not. (Where it is not it is possible to activate it and act on the DOMAIN Mode.) If it is, a verification is made of whether it is within the user context for this main-host, thus starting to evaluate this main-host by generating a seed number of sixty-four bits and a SCAN mode trigger in this main-host. This number is sent from the main-host to the clever-control, this number being evaluated again by the clever-control, using the RPDA logarithm, with the encoded information being sent to the main-host and being checked by this using the RPDA algorithm. In the case of the information being valid, it permits this information to act on the corresponding opening device and this same communication to be recognised by the clever-control from the main-host, both units passing to the idle state in this case. In the case of it not being valid, the aforementioned encoded information is refused action on the opening device.

Communication between the clever-control and the mirror-host, in this case the mirror-host also communicating with a main-host or control-host, includes recognition, with previous verification of the operating mode, of this communication from the clever-control to the mirror-host containing a clever-control serial number, its operating mode and the status of its battery As a first step, the mirror-host sends the identification of the mirror-host and that of the clever-control together with a seed number of sixty-four bits to the main-host or control-host; recognising whether this identification of the clever-control is activated or not in the main-host or control-host for this mirror-host. (In the case of it not being it is possible to activate and act using the DOMAIN Mode.) If it is, a verification is made of whether it is within the user context in the said main-host or control-host for this mirror-host and in this way the seed number of sixty-four bits is evaluated according to the RPDA algorithm by the main-host or control-host. The encoded information is sent to the mirror-host where it is checked by this using the RPDA algorithm. In the case of it being valid a new seed number of sixty-four bits and SCAN mode trigger are generated in this mirror-host from which they are sent to the clever-control, where this number is evaluated by the clever-control using to the RPDA algorithm. The corresponding coded information is sent to the mirror-host where it is checked using the RPDA algorithm ad, in the case of it being valid, this information allows action on the corresponding opening device and recognition of this having been communicated by the mirror-host to the clever-control, both units passing to the idle state in this case. In the case of it not being valid, the aforementioned encoded information is refused action on the opening device.

By employing the DOMAIN Mode in the system, action on a main-host or mirror-host derived from a command to activate this centre using the DOMAIN mode or deferred activation is carried out by storing predetermined secret information in a particular control by means of a main-host or control-host and a host control activated in these. This main-host or control-host shares, with the aforementioned main-host or control-host, actuators for the opening device in which the control is activated in deferred mode, pre-established secret information as a password, which makes up a domain mask, that permits remote activation or deferred activation by means of a control in a host, a domain having been previously personalised for the main-hosts or mirror-hosts that belong to a DOMAIN system determined by means of a domain name and a main password. In this case communication between the clever-control and the main-host includes recognition, with the previous verification of the operating mode, of this communication that contains a clever-control serial number, the operating mode and the state of the battery and, as a first step, it recognises whether the clever-mode is activated in the main-host or not (if it is the action is carried out as indicated previously). If it is not, a verification is made to establish whether it is possible to activate it by means of the DOMAIN system, by communicating the domain to which it belongs to the said clever-control from this main host, protected in the form of a domain mask and verifying whether this domain is loaded in the clever-control. If this is not so, both units go into the idle state and if it is so, the context restrictions that determine authorisation for use are sent from the clever-control to the main-host and the latter checks this information. In the case of these restrictions not complying, both units go into the idle state, and if these restrictions are complied with, an evaluation of this clever-control is started, a seed number of sixty-four bits and SCAN mode trigger being generated in the main-host. This is sent from the main-host to the clever-control where it is checked by it using the RPDA algorithm. It then sends the coded information to the main-host where it is checked by this using the RPDA algorithm. In the case of it not being valid, both units go into the idle state, and if it is valid, activation of the clever-control is permitted in the main-host and later action on the corresponding opening device with recognition of this and of the previous activation using the domain method communicated to the clever-control from the main-host. This last step is carried out after verifying whether the clever-control comes within the user context for this main-host and, if it is not within this context, the action on the opening device is not permitted, even when this activation recognition is produced by the DOMAIN method; while communication between the clever-control and the mirror-host (in this case this mirror-host communicating with the main-host or control-host) includes recognition, with the previous verification of the operating mode, of this communication that contains a clever-control serial number, the operating mode and the status of the battery and, having previously sent the identification of the mirror-host and the clever-control together with a seed number of sixty-four bits from the mirror-host to the main-host or control-host as a first step. A verification is made of whether the clever-control is activated in the main-host or control-host or not for acting in this mirror-host and (if it is the activating is carried out as indicated previously) if it is not, a verification is made to establish whether it is possible to activate it by means of the DOMAIN system, the main-host or control-host communicating to the mirror-host the evaluation of this number using the RPDA algorithm executed by the latter (the main-host or control-host) together with the domain to which this mirror-host belongs, protected in the form of a domain mask together with the real time, a new seed number of sixty-four bits generated in this main-host or control-host and a SCAN mode trigger. All this information is checked in this mirror-host using the RPDA algorithm and in the case of it not being correct, the units enter the idle state and, if it is correct, the domain protected by means of the domain mask in this mirror-host is communicated by the mirror-host to the clever-control and a verification is made of whether this domain is edited in the clever-control. If it is not, the units enter the idle state and, if it is, the context restrictions that determine authorisation for use are sent from the clever-control to the mirror-host and the latter checks this information. In the case of these restrictions not complying, both units go into the idle state, and if they are complied with, an evaluation of this clever-control is started, a seed number of sixty-four bits and SCAN mode trigger being generated in this mirror-host and this number being sent from the mirror-host to the clever-control, the number having been evaluated by the clever-control using the RPDA algorithm and this sends the coded information to the mirror-host where it is checked by this using the RPDA algorithm. In the case of it not being valid, both units go into the idle state, and if it is valid, a new evaluation is made of the information communicated in the mirror-host using the RPDA algorithm. This is sent, together with the context restrictions that determine authorisation for use, to the main-host where it is evaluated using the RPDA algorithm and in the case of it not being correct, both units go into the idle state, and, if it is correct, activation of the clever-control in the main-host or control-host is permitted for this mirror-host and later action on the opening device in this mirror-host with recognition of this and of later activation of the opening device in this mirror-host using the DOMAIN method communicated to the clever-control from the mirror-host. This last step is performed after verifying whether the clever-control comes within the user context for this main-host or control-host and, if it is not within this context, the action on the opening device is not permitted, even when this activation recognition is produced by the DOMAIN method.

Furthermore, in the aforementioned DOMAIN mode, the allotting of domains permitted to a clever-control is carried out by means of the main-host or control-host and a host clever-control and activated in these hosts and having all the units, that is to say, the main-host and/or mirror-host activation or action units and those for allotting main-host or control-host DOMAINS, take the same password if they intervene in a domain system, whether through activation and/or action or through the aforementioned allotting. So that, in this aforementioned allotting of permitted DOMAINS to a clever-control carried out in the main-host or control-host by going into the mode for loading access authorisation by a domain system, the first step of the clever-control is to locate whether the main-host or control-host is activated or not and if it is to enter the domains authorised and the context restrictions using a keyboard or a computer and, if it is not, the clever-control serial number and the name of the user are also entered using a keyboard or a computer. By acting optionally by pressing the pushbutton of the clever-control once, its serial number, operating mode and status of the battery are communicated to the main-host or control-host and a check is made of whether it is an operating mode for acting once on the pushbutton and, if it is, a verification is made of whether the clever-control serial number is the same as the serial number entered and/or present, activated or not in the said main-host or control-host. If neither the aforementioned check of the operating mode nor the verification of the serial number are is correct, the clever-control pushbutton can be optionally acted upon once more and, if the two above conditions remain, the authorised domain mask and the context restrictions are communicated by the main-host or control-host to the clever control together with the host clever-control serial number and activated in the allotting hosts (main-host or control-host) as a necessary condition for this communication, the latter being stored and the control and the hosts (main-host or control-host) going into the idle state.

A personalisation is performed of the mirror-host in the link between a mirror-host and a main-host or control-host that permits entering the main-host or control-host in link mode via the menu or software. The mirror-host serial number, name of the mirror-host, name of the domain of the mirror-host where this exists (this is the name whose mask, with the code complying with the domain name and password of the main-host or control-host to which it is linked, passes to the control when the access requested is not recognised, an evaluation is started by DOMAIN mode and activation refused in the mirror-host if a domain name is not specified), operating mode of the mirror-host (the corresponding number of times the clever-control pushbutton is pressed and the duration of the pressings), trigger mode of SCAN mode and SCAN mode signal denied are edited here. The mirror-host thus remains in link mode permitted by means of the activation button of this mirror-host. The serial number of the main-host or control-host and the operating mode of the mirror-host and the SCAN mode signal denied together with a seed number of sixty-four bits are communicated from the main-host or control-host to the mirror-host and this serial number, operating mode and SCAN mode signal denied are stored. An evaluation is made of this coded information in the mirror-host using the RPDA algorithm and this is communicated to the main-host or control-host. The evaluation is checked by the main-host or control-host and, if it is valid, activation of the mirror-host in the main-host or control-host is permitted and recognition of this communicated by the main-host or control-host to the mirror-host and the units go into the idle state in this case. If the aforementioned coded information is not valid, activation of the mirror-host is refused.

Using SCAN mode, this mode can be activated in the clever-control by means of its pushbutton or activated directly in the clever-control by acting on a main-host or mirror-host, in this case hands free opening occurring from this moment onwards without any limitation to acting on the corresponding opening device. This SCAN mode consists of a permanent and automatic attempt by the clever-control to communicate with the main-host or mirror-host of the corresponding opening devices. As a first step, the clever-control communicates a clever-control identification number and a SCAN mode message to the main-host or mirror-host and the main-host or mirror-host has the option of sending recognition of this communication together with a serial number for these to the clever-control. When this communication is detected by the clever-control, it checks whether these main-host or mirror-host serial numbers are new in the clever-control or not and if they are, executes the function for requesting short range opening in the clever-control. If this is satisfactory according to the SCAN mode or by acting on the clever-control, this main-host or mirror-host serial number is saved in the clever-control and the SCAN mode expiry time is reset. The clever-control goes into the idle state and once again sends identification and a SCAN mode message. If in either of the above cases the aforementioned recognition is not detected or there is no new main-host or mirror-host serial number in the clever-control or the execution of the function for requesting short range opening is not satisfactory, the clever-control continues to communicate its own identification number and the SCAN mode message to the main-host or mirror-host in the case of the SCAN mode time not having expired and this stops when the units go into the idle state, in the case of the SCAN mode time having expired.

The system means with regard to the third type host or vehicle-host consists of a control unit based on a micro-controller connected to a radio-frequency block with an antenna, together with a relay control block that acts on a relay for opening vehicle doors, on a relay for closing these doors, on an open/close relay for the boot of this vehicle and on an open/close relay of an auxiliary element, preferably via a standard actuator or conventional remote control for the vehicle acting on its conventional pushbuttons for opening doors, closing doors, on the pushbutton for opening/closing the boot and on the pushbutton for opening/closing the auxiliary element respectively via the aforementioned control block relays. The aforementioned control unit is also connected to a memory block with a button for activating, with a RESET/LEARNING unit, with a remote action interface and with an acoustic warning device. The aforementioned RESET/LEARNING unit receives a signal indicating the status of the vehicle ignition key position, while the control unit receives a signal indicating the status of the aforementioned relays. The supply for the corresponding circuits in this third type host comes from a block for supply and voltage regulation that connects with the battery of the corresponding vehicle.

As a first step, communication between the vehicle-host and the clever-control includes the sending of a serial number for the clever-control, the operating mode of this and the status of the battery, by the clever-control to the vehicle-host, with this vehicle-host verifying whether the operating mode is a permitted mode. If it is not, the units go into the idle state and, if it is, verify whether this serial number is activated in the vehicle-host. If it is not, the units go into the idle state and, it is, the vehicle-host communicates a seed number of sixty-four bits and a PROXY mode trigger to the clever-control. The clever-control makes an evaluation of this information using the RPDA algorithm and sends it to the vehicle-host. The latter checks the evaluation using the RPDA algorithm and, in the case of it not being valid, the units go into the idle state. If it is valid, it executes the function corresponding to the operating mode and recognition of this execution is communicated by this vehicle-host to the clever-control.

Furthermore, this clever-control is activated in the vehicle-host, thus permitting access when the ignition key of the corresponding vehicle is introduced in the start position and the button is pressed for activating the vehicle-host RESET/LEARNING button unit or acts on the remote action interface of this vehicle-host, for a particular time with the corresponding acoustic warning device sounding. At this moment, the aforementioned button is freed and this vehicle-host unit then goes into learning mode and has a certain time to activate the clever-control. Meanwhile, to de-activate and remove all the clever-controls associated with the vehicle-host, the ignition key of the vehicle is introduced in the start position and the aforementioned button is pressed or the aforementioned interface is acted on until a particular acoustic signal is heard. The button is freed when the acoustic signal is heard and a certain time is then available for pressing a clever-control that will be the only one left active in the system, the other ones having been de-activated (if this clever-control is not entered, the other ones will not be deleted). Meanwhile, the programming of the vehicle-host control unit is carried out by introducing the ignition key of the vehicle in the start position and pressing the aforementioned button or acting on the aforementioned interface, until a particular acoustic signal is heard. A certain time is then available for establishing the number of presses for the first relay or command (normally the one for opening doors) at a medium distance, then listening for the acoustic signal for confirmation in order to pass on to establishing the number of presses for the second relay (normally for closing doors) also taking a certain time and listening for the acoustic signal for confirmation in order to pass on to establishing the number of presses for the following relay and so on successively until the four relays have been configured. The particular confirmation signal is then heard indicating the end of the relay configuration in the same way as when completing any of the previous steps by letting a particular time pass. By a short press on the clever-control pushbutton within the maximum time determined, the PROXY mode of the clever-control is established which closes all the relays as the clever-control moves away from the vehicle. By a short press on the clever-control pushbutton within the maximum time determined, a permitted operating mode is established that adds a long press at the end of the above events that is useful in long distance situations. The programming process comes to an end with an acoustic signal for confirmation.

With PROXY mode activated, a communication is made from the clever-control to the vehicle-host with the clever-control serial number and a PROXY mode message. This communication is received by the vehicle-host, which has the option of sending recognition of this communication from the vehicle-host to the clever-control. If this recognition is received, the clever-control goes into the idle mode until the next PROXY mode message is sent from the clever-control to the vehicle-host. This occurs in continuous mode if recognition is received and if this recognition is not received, the function for closing the vehicle doors is executed, the clever-control and vehicle-host units going into the idle state.

According to the execution preferred for the invention, the first type host or main-host can consist of a control unit based on a micro-controller connected to a radio-frequency block with an antenna, together with a relay control block for opening/closing the corresponding accesses. This unit is also connected to a memory control block, a battery and a clock in real time and also has a control unit for other elements consisting of a printer, monitor or display, keyboard, unit for voice messages and acoustic warning device, the supply for the circuits corresponding to this first type host being by means of a power supply block.

The main-host can be personalised by means of a process launched automatically in the first connection or manually by means of menus, using its keyboard and control unit and including the following:
- An indication of the denominating name or alias of the main-host that will identify it in both printed lists and those on screen.
- Name of the domain to which the main-host belongs, where required, this being a name whose mask (coding in accordance with the domain name and main-host password), passes to the remote control when the access requested has not been recognised, an evaluation being started by the DOMAIN mode and activation being denied in the main-host if a domain name is not specified.
- Block pin number (four digits): quick block number that allows the main-host to be invalidated for accidental accesses.
- Main-host password (fifteen characters): this is a long name composed of the main-host password and is used to protect the main-host access functions (inclusions, removals, contexts, domains, etc.) and to guarantee security in activation and action processes according to restrictions by DOMAIN mode, configuring the domain mask.
- The number of set presses: the manner for acting on the main-host is established by means of a menu (in which the number and duration of the pressings on the clever-control pushbutton are referred to).
- Configuration for the main-host to accept opening in SCAN mode and/or if the main-host is activated in this SCAN mode.

With respect to the second type host or mirror-host, this can consist of a control unit based on a micro-controller connected to a radio-frequency block with an antenna, together with a relay control block for opening/closing the corresponding accesses. This unit is also connected to a memory control block, to a link unit and an activation button, to a visual signalling block and an acoustic warning device. The supply for the circuits corresponding to this second type host is by means of a power supply block.

On the other hand, the clever-control can consist of a control unit based on a micro-controller connected to a radio-frequency block with an antenna, together with a relay control block for opening/closing the corresponding accesses. This unit is also connected to a memory control block, to an acoustic warning device and to a pushbutton on the remote control. The supply for the circuits corresponding to this clever-control is by means of a supply block consisting of a battery.

Again the aforementioned RPDA-DATA-LINK interface unit of the host-control may have functional blocks that consist of a control unit based on a micro-controller connected to a radio-frequency block with an antenna, together with the PC of the host-control. This control unit is also connected to a memory block, to a battery, to a real time clock, to a display and to an acoustic warning device. The supply for the circuits corresponding to this RPDA-DATA-LINK interface is by means of a power supply block.

Further, the pre-established modes for the number and duration of the presses on the control pushbutton consist of only two types of presses being accepted, short presses and long ones, and in the case of a long pressing, this is always the last in each control action; the following types of openings being established for the accesses:
- A short press, for short and very short range openings, such as those for doors for pedestrians.
- A long press, for long range openings, such as those for access to certain garages.

The main advantages of the invention system, as has been described, are its great security though using the RPDA algorithm, its controls with a single pushbutton and the fact that it can be integrated in larger systems, the hands free and remote inclusion modes, the acoustic warning devices and its ease of installation and use.

In order to provide a greater understanding of this descriptive report and forming an integral part of it, some figures are provided below representing the object of the invention. These are of an illustrative and nonlimiting nature.

### BRIEF DESCRIPTION OF THE FIGURES

**Figure 1.-** This is a schematic of a first example of the remote control system for the management and control of accesses, produced according to this invention and applied to a dwelling with a garage.
**Figure 2.**- This is a schematic of a second example of the remote control system for the management and control of accesses, produced according to this invention and is similar to Figure 1 above, but the application is enlarged to apply to a second dwelling particularly for holiday use away from the main area in which the system is located.
**Figure 3.**- This is a schematic of a second example of the remote control system for the management and control of accesses, produced according to this invention and is similar to Figure 1 above, but the application is enlarged to apply to a motor vehicle.
**Figure 4-** This is a schematic of a second example of the remote control system for the management and control of accesses, produced according to this invention and applied to an hotel in which great centralisation of this control and management is required.
**Figure 5.-** This is a functional block diagram of the receiver host called the "main-host" and used in the systems employed in previous examples one, two and three above in figures 1, 2 and 3 respectively.
**Figure 6.-** This is a functional block diagram of the receiver host called the "mirror-host" and used in the systems employed in previous examples one, two, three and four above in figures 1, 2, 3 and 4 respectively.
**Figure 7.-** This is a functional block diagram of the receiver host called the "vehicle-host" and used in the systems employed in the third example above referred to in figure 3.
**Figure 8.-** This is a functional block diagram of the control called the "clever-control" and used in the systems employed in previous examples one, two, three and four above in figures 1, 2, 3 and 4 respectively.
**Figure 9.-** This is a functional block diagram of the interface unit called "RPDA-DATA-LINK" of the host called "control-host" employed in the fourth example above referred to in figure 4.
**Figure 10.-** This is a synoptic table that shows a personalisation process for a host receiver of the type called "mirror-host" and its link with a host of the type called "main-host" or with one of the type called "control-host". This synoptic table is valid for any of the four examples referred to in the previous figures 1 to 4.
**Figure 11.**- This is a synoptic table for the flow of messages when a mode called the "PROXY mode" is being executed between the so-called "clever-control" and the host receiver known as the "vehicle-host". This synoptic table is valid for the third example of the invention referred to in figure 3 above.
**Figure 12.**- This is a synoptic table of the communication between the "clever-control" and a host of the "main-host" or "mirror-host" type, or a communication between host of the type called "main-host" or "control-host" and a host of the type called "mirror-host". The way in which the communication for opening-final activating and for inclusion and activating, in the case of it being in the "DOMAIN" type mode, is described in this table. This synoptic table is valid for any of the four examples referred to in the previous figures 1 to 4.
**Figure 13.-** This is a synoptic table of the communication between the "clever-control" and a host of the "vehicle-host" type that shows a flow of messages between the two. This synoptic table is valid for the third example of the invention referred to in figure 3 above.
**Figure 14.**- This is a synoptic table that shows how access loading authorisation is established using the so-called "DOMAIN" mode. This synoptic table is valid for the second example of the invention referred to in figure 2 above.
**Figure 15.-** This is a synoptic table that shows how "SCAN" mode functions, the "clever-control" communicating with a host of the "main-host" or "mirror-host" type. This synoptic table is valid for any of the four examples referred to in the previous figures 1 to 4.

### DESCRIPTION AN EMBODIMENT OF THE INVENTION

A description is now given of four examples of the invention, with reference to the numbering used in the figures.

The first example of the invention is a remote control system for the management and control of accesses that is shown in figure (1) and which has various remote controls (1) called "clever-control", with receiver hosts (2) called "main-host" and with other receiver hosts (3) called "mirror-host".

Hosts (2) and (3) govern the opening/closing of respective accesses. So, a host (2) governs the main door (66) of a dwelling, another host (2) governs the garage door (68) of the dwelling, a host (3) governs a service door (67) of the dwelling, another host (3) governs the entrance hall door (69) of the dwelling and another host (3) governs the gate (70) of the said building.

The remote controls (1) communicate via radio with the hosts (2) or (3) for the opening and closing of the various accesses (66) to (70) and each remote control (1) has a single pushbutton (5) for acting, so that the controls 1 can control and be controlled by hosts (2) and (3) in terms of the number of presses and the duration of these.

Normally all the accesses can be activated by means of a single press by which the nearest access is activated. In this way the remote controls (1) of the different users are capable of discerning the receiver host to actuate and it is possible to use the system with various accesses with the remote controls (1) of a single pushbutton (5) in a simple manner, for example, if before access to a community garage (68) there is an outside gate that will open or not according to the distance for activating, differentiating it from the access to the garage.

Communications between the remote controls (1) and hosts (2) and (3) are bi-directional and include a secret code that is stored both in the remote controls (1) and in hosts (2) and (3). This code is put into practice by means of a specific development algorithm for this system, called the RPDA (Referential Positioning Dynamic Algorithm) and consists of a pre-coded preface that heads all the communication messages and which requires a satisfactory reply from the communicating element (1), (2) or (3) at the end of the entire flow of messages. The RPDA algorithm thus ensures authorisation for use in the system and the inviolability of the messages in it.

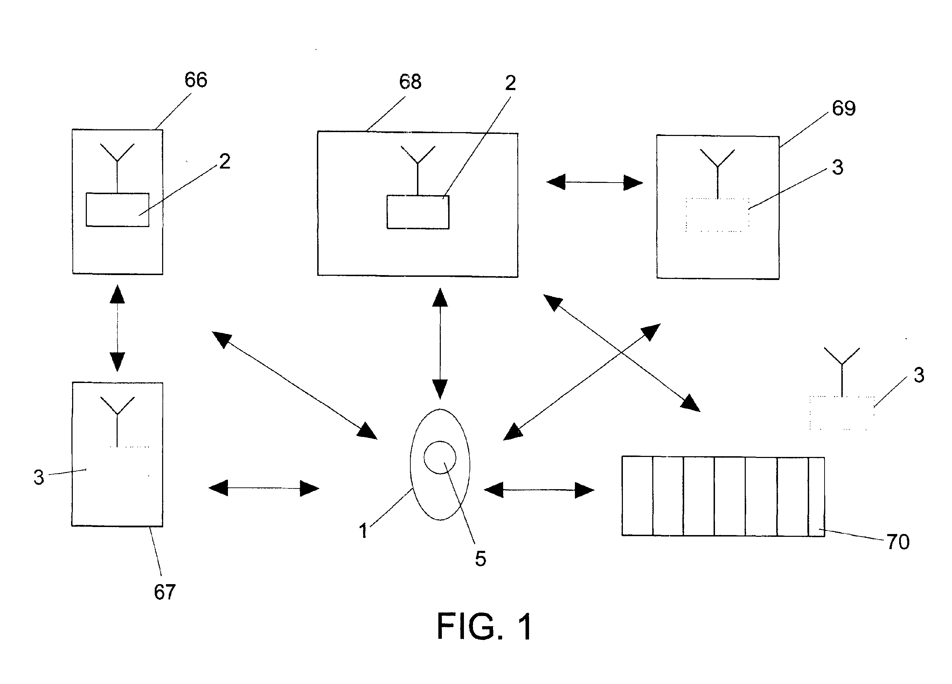

The hosts (2), as well as governing their respective accesses (66) and (68), carry out management and control functions for access and remote controls (1); while the hosts (3), apart from communicating with the remote controls (1), merely govern their respective accesses and the control and management necessary depends on any of the hosts (2), for which hosts (2) and (3) communicate with each other, also by radio, by means of communications with similar characteristics to those of the communications between remote controls (1) and hosts (2) or (3). Thus, the management and control of the service door (67) is carried out by host (2) of the main door (66) , while the management and control of the entrance door (69) and the outside gate (70) is carried out by host (2) of garage door (68) , as shown by the arrows in figure 1. This resolves the needs of this example, but in other cases, obviously, another configuration in the number of hosts (2) and (3) employed and the dependencies between them can be established.

Communication between the control (1) and host (2) or (3) is a bi-directional data communication in which a question-answer process and evaluation are carried out thorough an exchange of passwords. In this communication, control (1) receives a code from host (2) or (3) and evaluates it using an RPDA algorithm. It sends the evaluation to host (2) or (3) with verification occurring in host (2) or (3) as well as the reception of information for the established functions. Access is permitted or not and these functions are executed or not according to whether this verification is valid or not, which ensures that only authorised users can use the system. The result is that the system will be disabled unless it is tampered with via the algorithm.

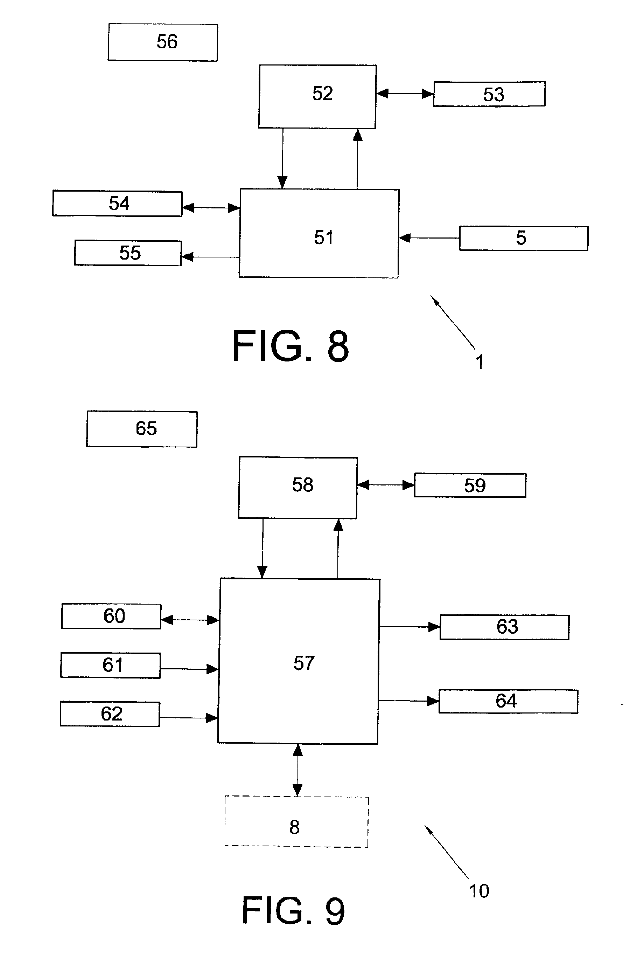

Remote control (1) can be personalised and has a key-ring type configuration. The control (1) has functional blocks of which details are given in figure 8. It consists of a control unit (51) based on a micro-controller connected to a radio-frequency block (52) with an antenna (53). This unit (51) is also connected to an EEPROM type memory block (54), with an acoustic warning device (55) and a pushbutton (5). The supply block (56) for remote control (1) consists of a small battery.

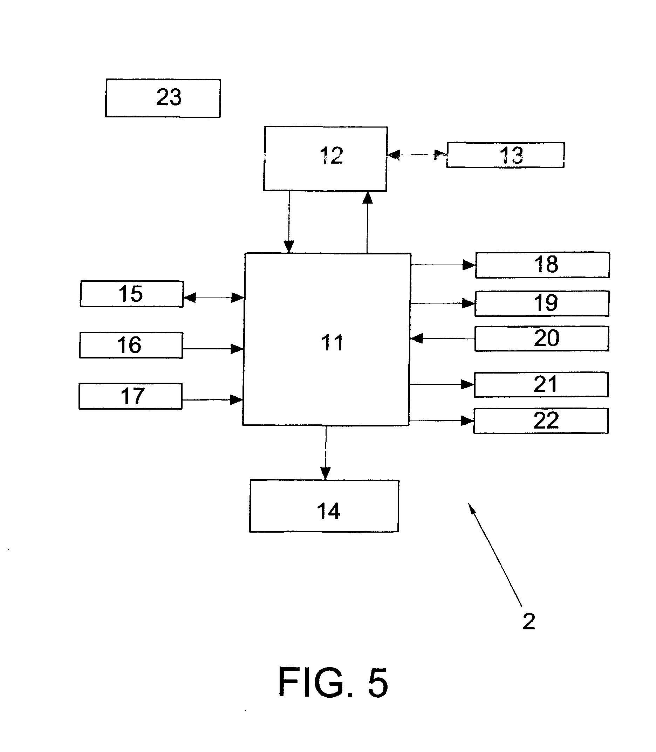

Every host (2) has a functional block of which details are given in figure 5. It consists of a control unit (11) based on a micro-controller connected to a radio-frequency block (12) with an antenna (13). This unit (11) is also connected to a relay control block (14) that can have various channels and makes the opening/closing of the various accesses possible. Furthermore, unit (11) is connected to a memory block (15) consisting of a RAM type memory and another EEPROM type that can be extended. Other elements connected to the control unit (11) are a battery (16), a real time clock (17), a printer (18), a display (19), a keyboard (20), a voice unit (21) for voice messages and an acoustic warning device (22). Furthermore, host (2) includes a power supply block (23).

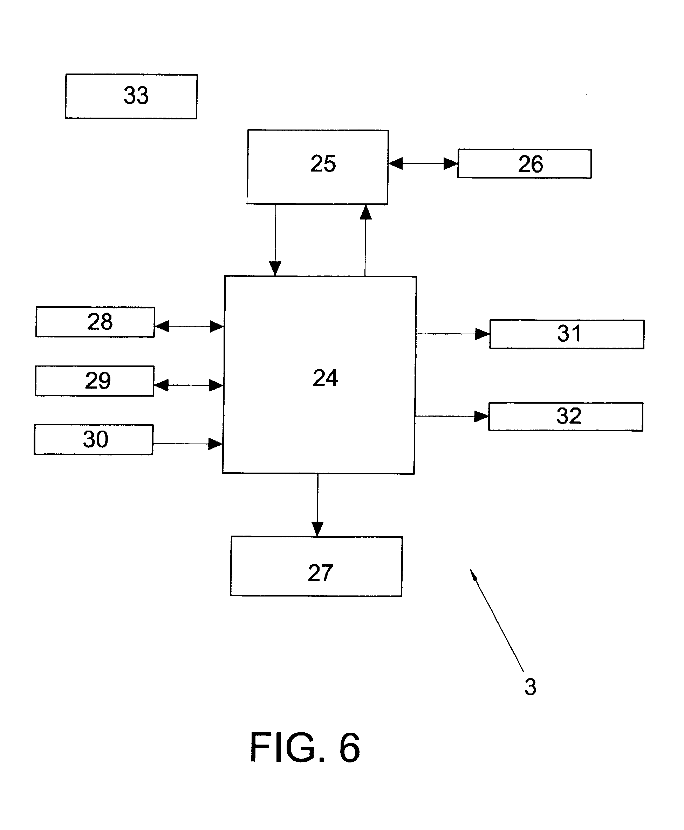

On the other hand, each host (3) has a functional block of which details are given in figure 6. It consists of a control unit (24) based on a micro-controller connected to a radio-frequency block (25) with an antenna (26). This unit (24) is also connected to a relay control block (27) for opening/closing the corresponding accesses. Furthermore, unit (24) is connected to an EEPROM type memory block (28) with a link unit (29), an activating block (30), a visual signalling block (31) and an acoustic warning device (32). Each host (3) is supplied by means of a power supply block (33).

All accesses from (66) to (70) can be managed and controlled with the configuration and structure described, including and removing any remote control (1) at any access, which easily resolves any losses or controls or thefts of these. Time restrictions can also be imposed, user data and incidents at accesses can be printed, as well as other possible functions of the system.

A user can make his control (1) automatically enter the so-called "SCAN" mode on opening an outside gate (70) or the entrance hall door (69). In this mode, the dwelling door (66) will automatically open as he/she approaches it without the need for using or showing control (1), which is very convenient, for example, when loaded with packages.

A user with access to the service door (67) and the main door (66) of a dwelling can access these without any problems with remote control (1) using a single pushbutton (5), however close the doors are, without any problems of ambiguity. It is sufficient, for example, to press the remote control (1) quickly once for the main door (66) and twice for the service door (67). All the services with regard to access control of both doors (66) and (67) will be maintained and these are accessed by means of host (2) of the main door (66). Furthermore, this host (2) can have particular functions such as voice messaging ( ) for the first user to enter or for a particular user as wished, together with functions that guarantee privacy conditions, that is to say, that the user who is at home can de-activate all the controls (1) that have access for a time, via host (2) of door (66) and with previous authorisation, thus guaranteeing his/her privacy.

It is evident that with this configuration a person in service can have access only by the service door (67) and the entrance hall door (69), but will not have access at any other point and the hours for this use can be restricted.

In the case of the garage door (68), access can also be managed, for example, in the case of garage maintenance personnel. They can be allowed access solely to the outside gate (70) and to the garage door (68) at particular times and will not be able to access other doors, except on a special occasion in which they will be able to have restricted access temporarily to the entrance hall door (69) (for example, for the duration of a work period).

The clever-control (1) can be included by two different means consisting of:
- Manual inclusion by indicating the serial number of the corresponding password (control) to be activated using the keyboard (20) of a first type host (2), using computer (8) of a visual control host (7) or by means of the clever-control (5); in which case an alias or user name can be associated with this control.
- Inclusion in deferred mode using DOMAIN mode and without the physical presence of users or of the clever-control for the host to be activated, although there will be for the other host in which the corresponding authorisation is loaded by means of the aforementioned keyboard (20) or computer (8). In this case the alias or user name is inherited from the aforementioned host in which the authorisation is loaded.

The voice message referred to previously can include messages that indicate the status of the system, messages for the first password entered (control), messages for one or various selected passwords (control) and a message for a person leaving when the door is unlatched.

On the other hand, the acoustic warning device (55) of the clever-control (1) mentioned previously can be a buzzer that generates an acoustic warning signal that is:
- A short signal when the clever-control enters the SCAN mode.
- A long signal when operating normally; the tone of this long signal varies when the battery (56) of the clever-control (1) is running out.

It is also possible to enter a mode in the remote control (1) via its pushbutton (5) that allows the configuration of an access authorisation mode by a combination of presses as a password that guarantees authorisation even when the control (1) is being used by unauthorised users. This mode is also very interesting for possible security applications with the system being disarmed by means of passwords entered on the keyboard, which could be substituted by the said combination of presses as a password in remote control (1), without the need to access the security system using the said keyboard.

The system is easily configurable and it is very simple to use. It has high security. Protected bi-directional communication by means of the RPDA algorithm gives the system total security in the face of any possible handling with frequency recorders or scanners.

The advantages of the system are numerous and feasible because of the usage of a technology which permits a very high process speed, reaching 115 kBauds, which also involves low consumptions in the case of control (1).

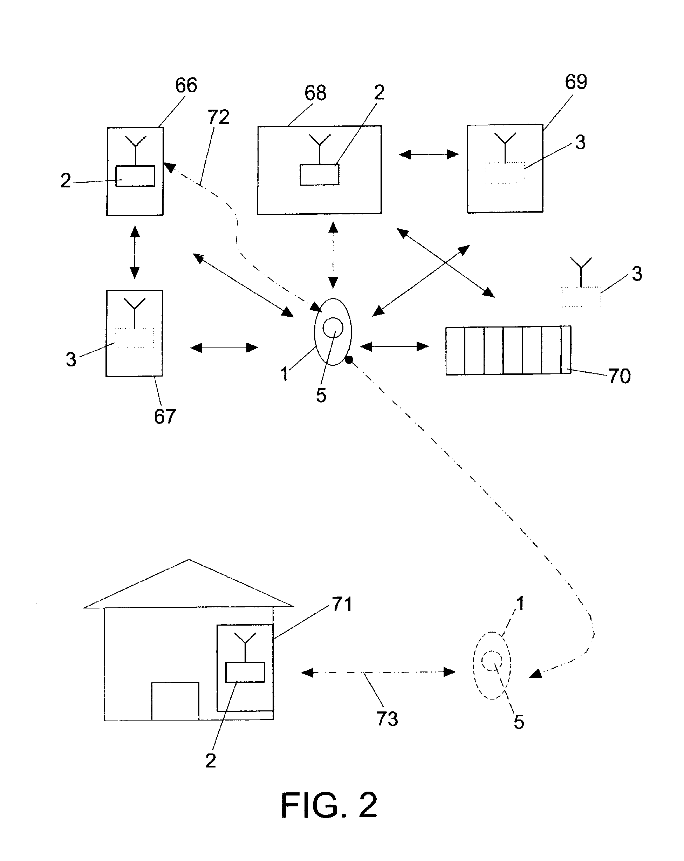

The second example of the invention, shown in figure 2, is analogous to the first, but the system is enlarged with the addition of a second dwelling for holiday use (71) at a considerable distance from the main area in which the system is located, for which another host (2) is associated with the access or accesses of this second dwelling (71), as shown in figure 2. With this configuration it is possible to include or remove remote controls (1) in deferred mode so that this second dwelling can be accessed or not without the need for the corresponding user or the control to go to it. For this, a mode called DOMAIN mode is used which allows the inclusion or removal of remote control (1) for access to the second dwelling (71) by acting on the host (2) of door (66) of the main dwelling.

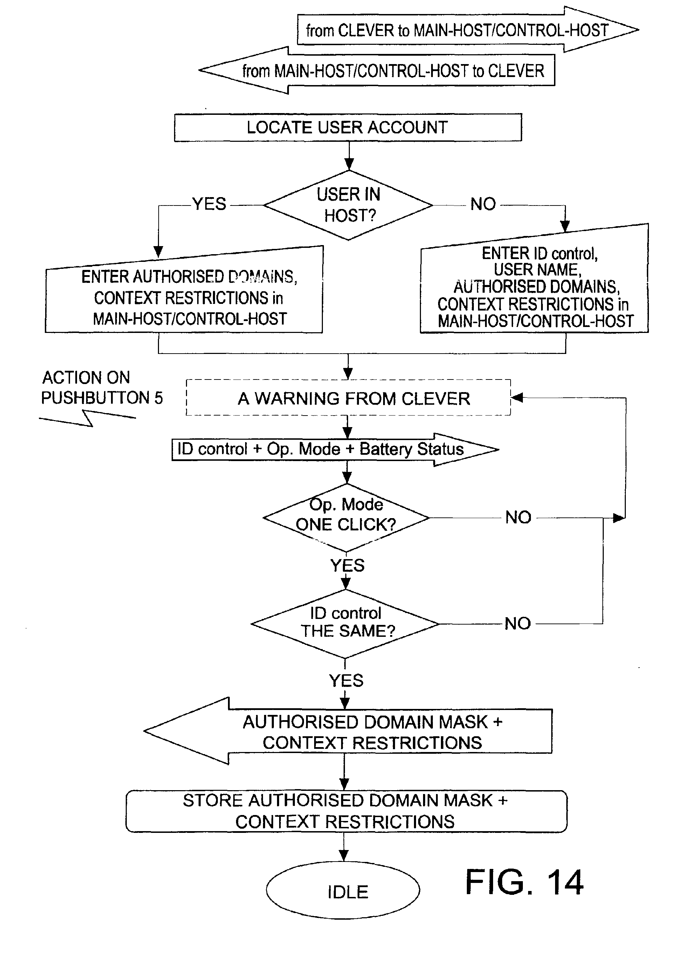

DOMAIN mode makes it possible to activate or include a user in deferred mode, this being a process that is carried out by means of loading access authorisation by the DOMAIN mode, details of which are given in the synoptic table in figure 14, in host (2) of door (66) in figure 2 and activating this in deferred mode in host (2) in the second dwelling (71), always provided that all the receiving hosts (2) have the same access password. This password, together with a domain name, makes up the domain mask for each domain. The inclusion or activation of a user with remote control (1) is possible for host (2) of the second dwelling (71) by authorising remote control (1) in another host (2), in this case this host (2) of door (66), via communication (72), with the two hosts (2) using the same password.

This is very useful for making a remote inclusion without the host or remote control (1) having to physically go to the place in which the inclusion is required, in this case the second dwelling (71), for a particular user with remote control (1), in the first instance, because if the presence of remote control (1) and the user invited to access the second dwelling (71) is necessary, remote control (1) is activated in host (2) of the second dwelling (71) by means of communication (73), also allowing access at that moment or not, depending on the context restrictions evaluated together with the authorisation and identification of control (1) by means of the RPDA algorithm.

In situations with a high-risk level it is possible to refuse activation using this DOMAIN system in any remote control (1), a condition that is carried out by not introducing a domain name in the corresponding personalisation of host (2).

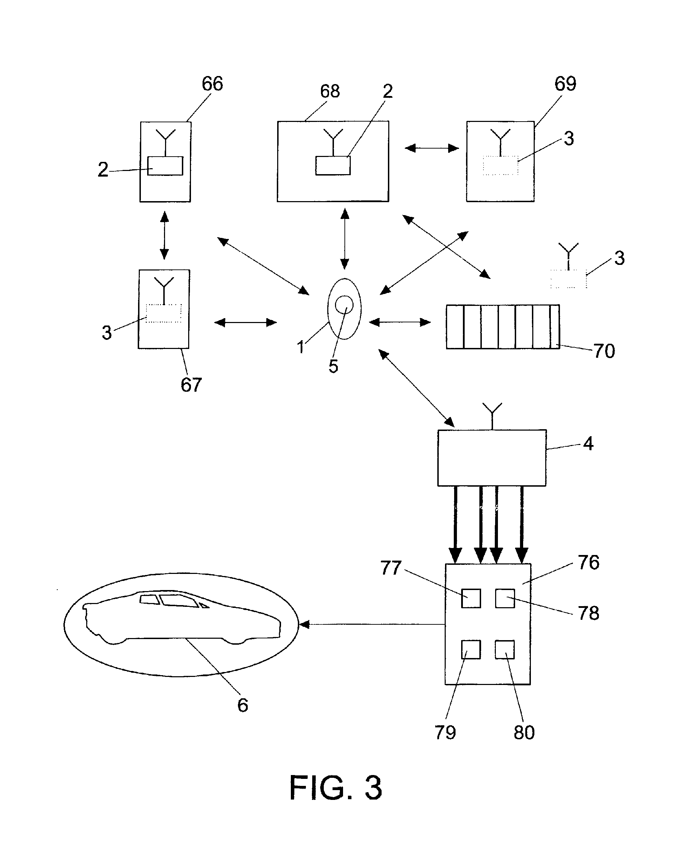

The third example of the invention, shown in figure 3, is also analogous to the first but, in this case, the system is enlarged with accesses to a motor vehicle (6). In this case, vehicle (6) has another receiving host (4) called a "vehicle-host" that communicates with remote control (1) in an analogous manner to that in hosts (2) and (3).

Host (4) governs various accesses to vehicle (6) by means of a relay for opening doors (38), a relay for closing doors (39), a relay for opening/closing the boot (40) and a relay for opening/closing an auxiliary element (41). This governing is preferably carried out via a standard actuator (76) in the vehicle acting on conventional pushbuttons for opening doors (77) and closing these doors (78), acting on a pushbutton for opening/closing the boot (79) and on a pushbutton for opening/closing an auxiliary element (80), respectively via the aforementioned relays.

In this way, as well as being able to act on accesses (66) to (70), remote control (1) can open and close vehicle accesses (6) by means of remote control (1) operating modes previously programmed in host (4).

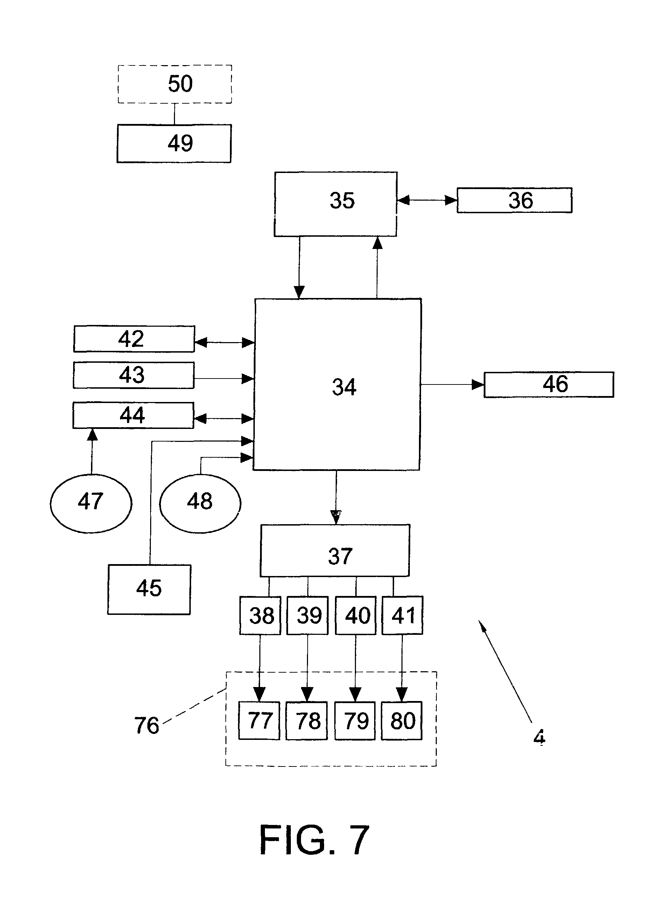

Host (4) has functional blocks of which details are given in figure 7. It consists of a control unit (34) based on a micro-controller connected to a radio-frequency block (35) with an antenna (36). This unit (34) is also connected to a relay control block (37) that acts on relays (38) to (41) referred to previously that preferably govern the conventional pushbuttons (77) to (80) of the aforementioned standard actuator (76). Furthermore, the control unit (34) is connected to an EEPROM type memory block (42) with a button for remote activating (43), with a RESET/LEARNING unit (44), with a remote action interface (45) and an acoustic warning device (46). The said unit receives a signal (47) that indicates the status of the ignition key position of vehicle (6), while unit (34) receives a signal (48) that indicates the status of the relays (38) to (41). The supply for this host (4) is by means of a supply and voltage regulation block (49) that connects to the battery (50) of vehicle (6).

It is possible, by means of remote control (1), for example, to unify access to the garage (68) and any vehicle (6) in a single control (1) with this system, which reduces the number of controls, thus gaining in convenience and security.

Furthermore, by means of host (4), it is possible to activate and de-activate remote controls (1) very simply using the RESET/LEARNING unit (44) which, by using button (43), allows all the remote controls (1) activated to be deleted, guaranteeing that one remains activated, or the activation of a remote control (1) very easily, together with the possibility of programming a mode called PROXY mode or hands free closing when moving remote control (1) away from vehicle (6), which is the equivalent of automatic closing when leaving vehicle (6).

Host (4) is programmed using button (43) which, when it is kept pressed for ten seconds until five beeps are heard, goes into programming mode and then the operating mode for remote control (1) is defined for each action by means of a time or sequence of orders on host (4) by pressing pushbutton (5) of remote control (1).

Host (4) includes the interface for remote action (45) for the RESET/LEARNING unit (44) which, for example, permits pressing pushbutton (43) to be substituted by the action of flashing the vehicle (6) headlights, the activation/de-activation of remote controls (1) and the programming of this host (4) thus being more comfortable.

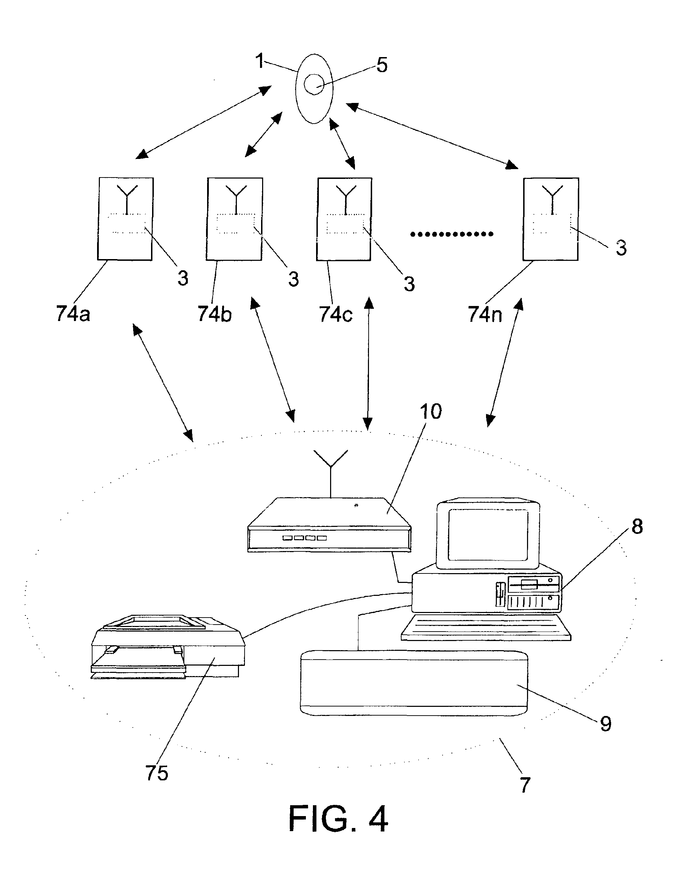

The fourth example of the invention, shown in figure 4, differs more from the previous ones and is suitable for situations in which great centralisation of access control is required, such as in the case, for example, of hotel rooms. In this case, the accesses or doors to hotel rooms (74a), (74b), (74c) 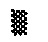 (74n) are all governed by respective hosts with remote controls (1) in an analogous manner to that of the first example of the invention. Furthermore, these hosts (3) communicate with a visual control host (7) in an analogous manner to that in which hosts (3) communicate with hosts (2) in previous examples.

This host (7) is analogous manner to a host (2) with the exception that it allows visual control of all accesses and that it cannot directly govern these accesses.

The host (7) has a PC type computer (8) provided with visual access management software (9). The computer (8) is connected to a printer (75) and a specific interface unit (10) for this application called a "RPDA-DATA-LINK" unit.

This interface unit (10) has a functional block of which details are given in figure 9. It consists of a control unit (57) based on a micro-controller connected to a radio-frequency block (58) with an antenna (59). This unit is also connected to the computer (8) and a memory block (60) that includes RAM type memory and EEPROM type that can be extended. The control unit (57) is also connected to a battery (61), a real time clock (62), a display (63) and with an acoustic warning device (64). The supply for this unit (10) comes from a power supply block (65).

Figure 5 shows the blocks for host (2), as explained above. In the hosts (2), the functions of personalisation, link with hosts (3), activation of users with remote controls (1), domains, context restrictions, printing, etc., can be carried out by means of a menu, with display (19) and keyboard (20) included in control unit (11) itself. Bi-directional communication is via radio-frequency block (12). Voice messaging is carried out by voice unit (21) and it is possible to give warning using the acoustic warning device (22) when the door is closed, etc.

Figure 6 shows a block diagram of host (3) explained previously and a link with host (2) or (7) is permitted using the activation button (30) that forms part of the system.

Figure 7 shows a block diagram of host (4) also explained previously, where its RESET/LEARNING unit (44) can be seen together with two action modes on this via button (43) or by remote action with interface (45) via vehicle light controls or similar. The necessary condition or status signals, (47) and (48), voltage regulator block (49) that is supplied from the battery (50) of vehicle (6) and the allotting of relays (38) to (41) can also be seen.

Figure 8 corresponds to the remote control (1) blocks and figure 9 to the blocks of interface unit (10), both already commented on.

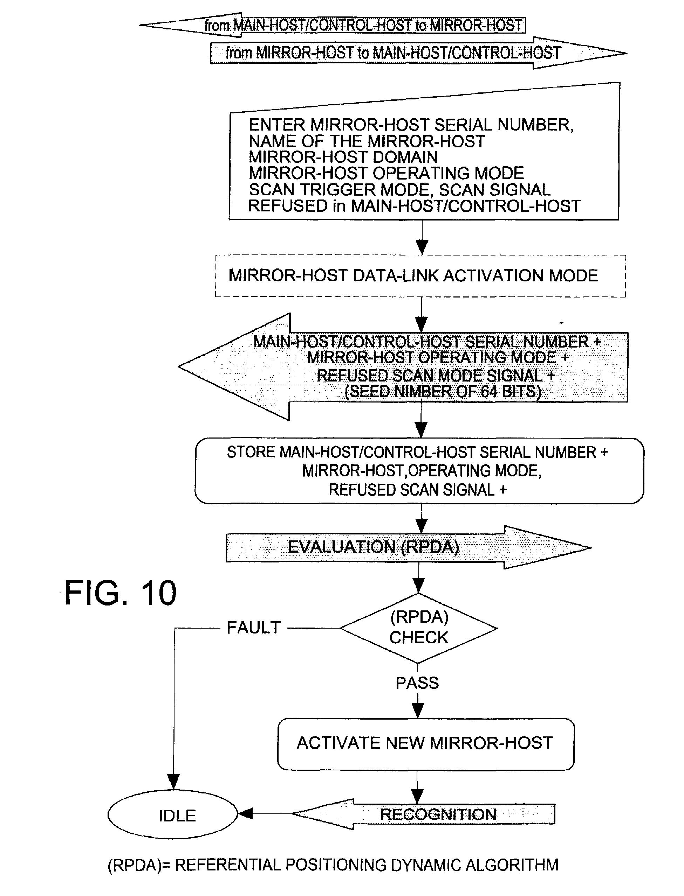

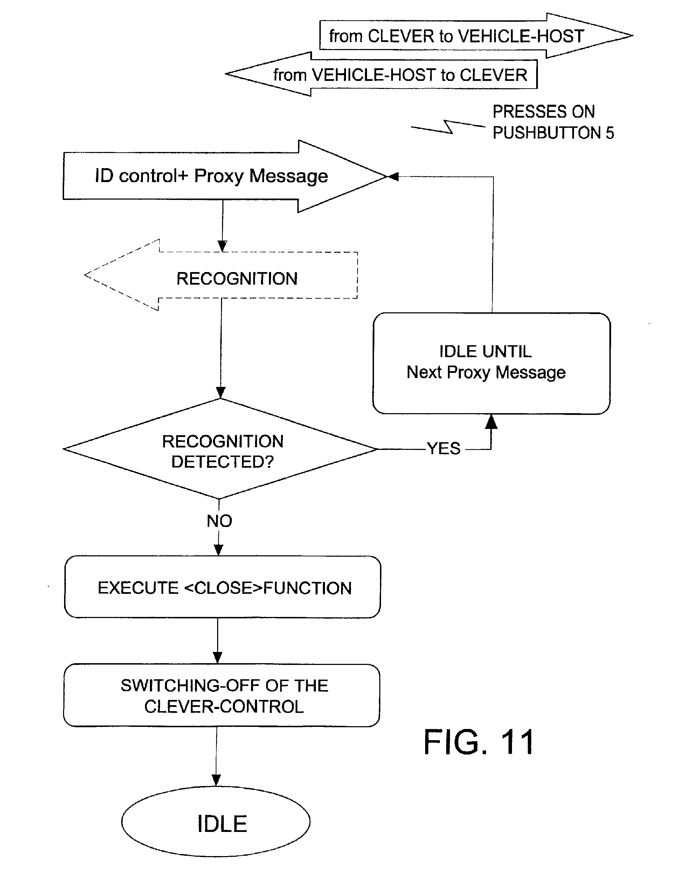

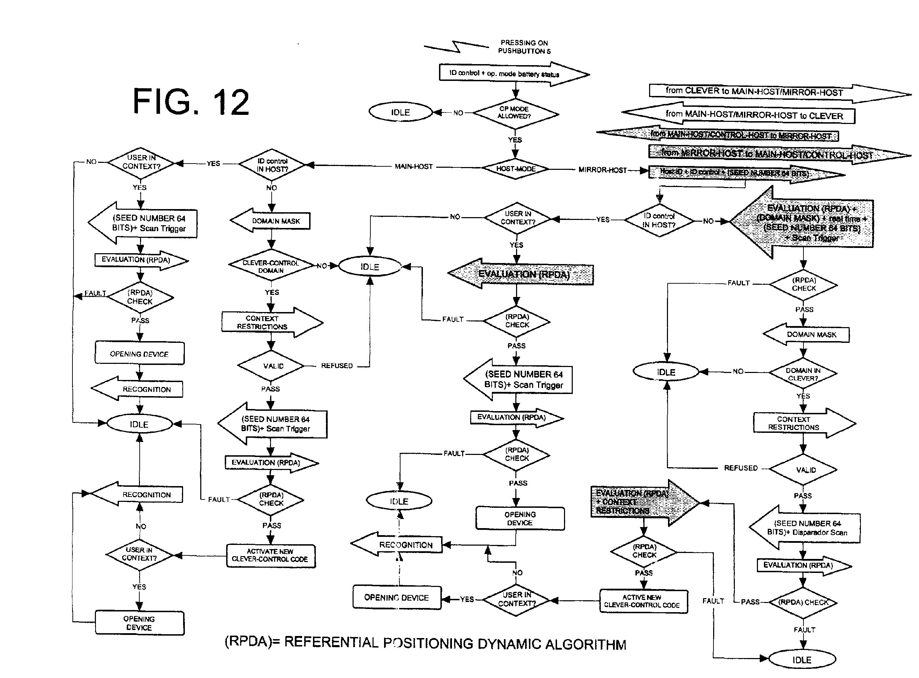

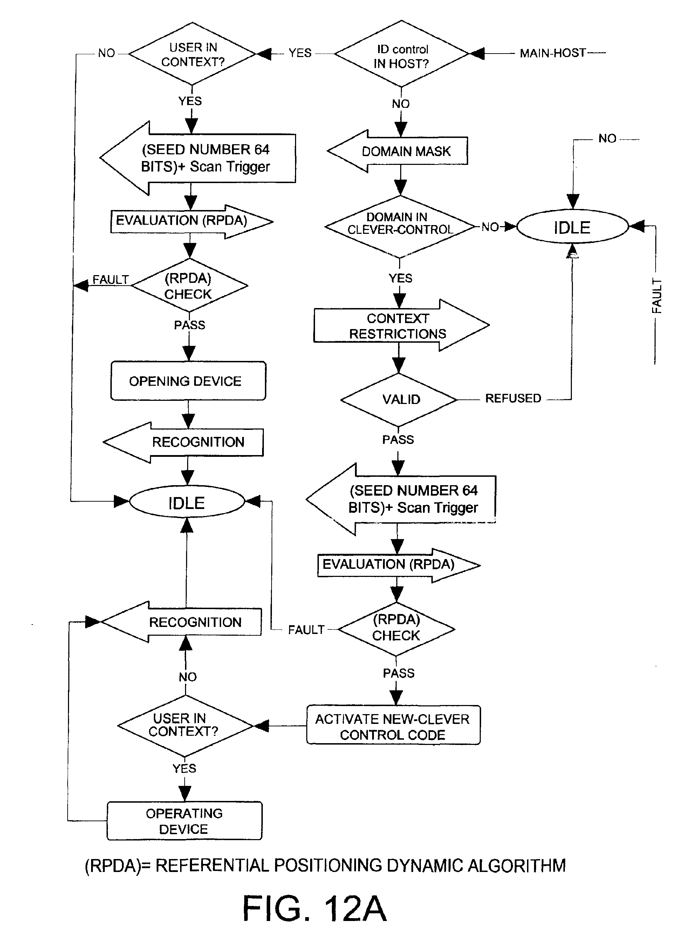

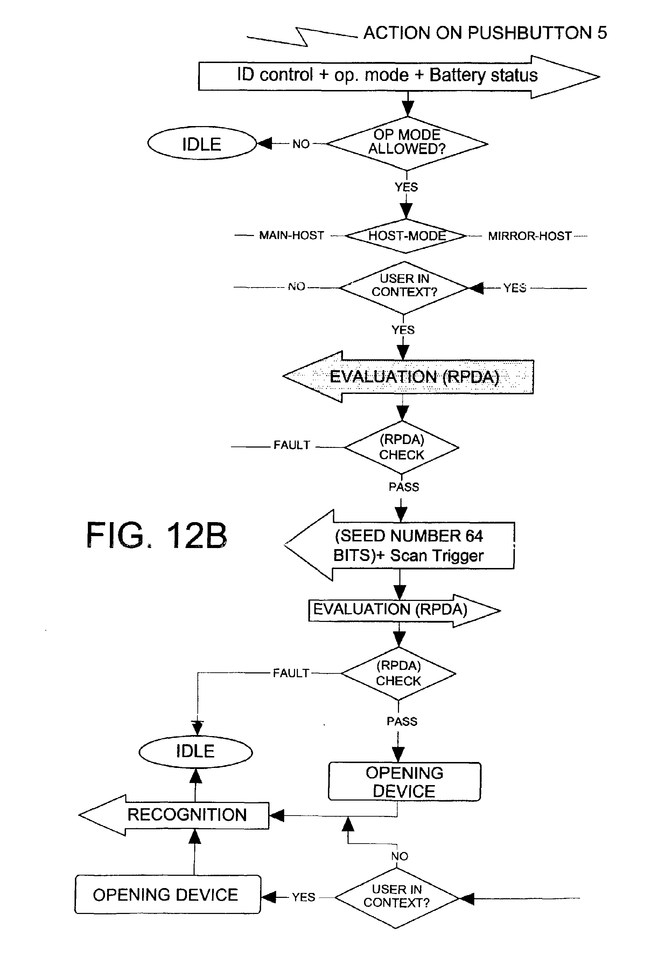

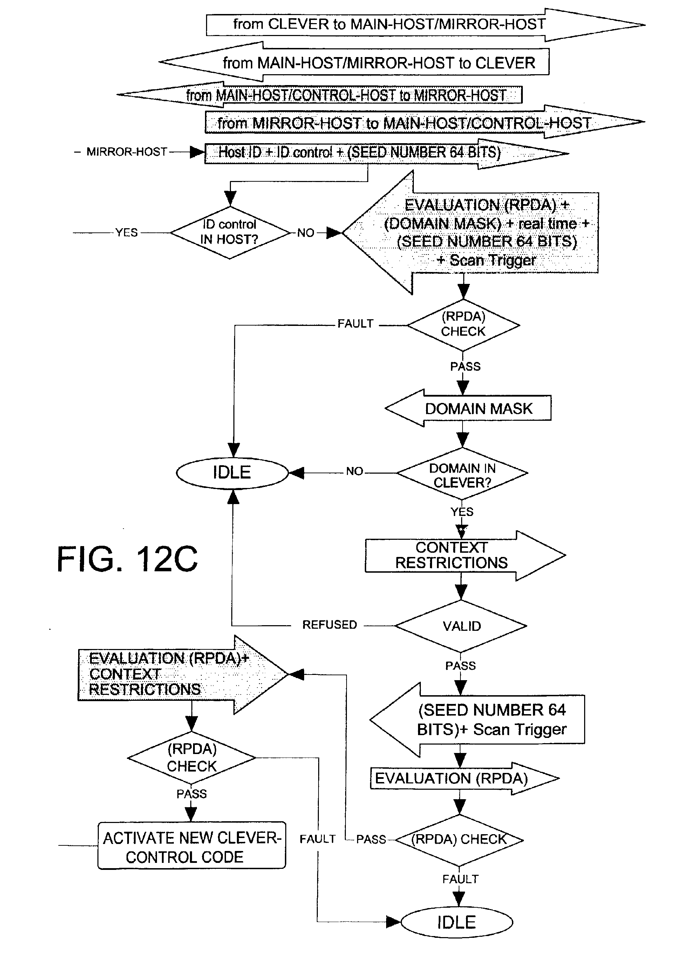

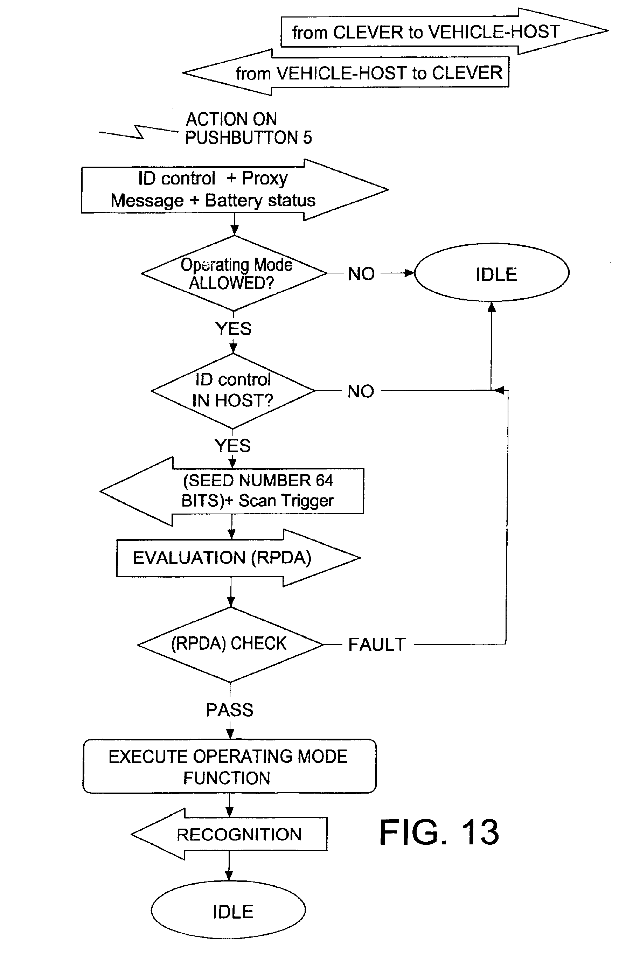

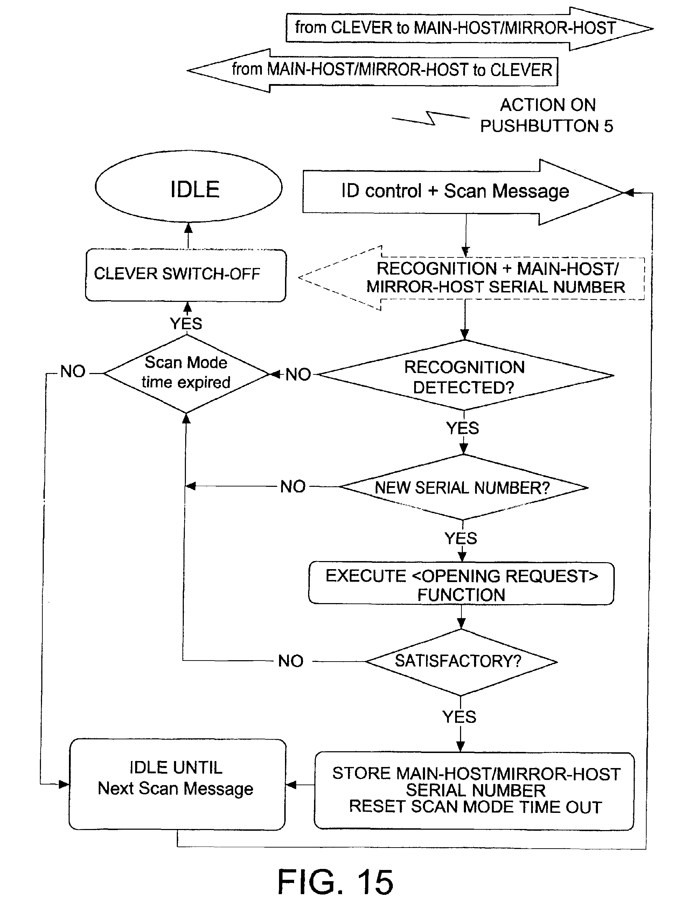

Figures 10 to 15 are synoptic tables that show communications between different elements in the system. Figure 10 shows the personalisation process for a host (3) and its link with a host (2) or (7). Figure 11 shows the flow of messages when PROXY mode is executed between remote control (1) and host (4). Figure 12 shows communication between a host (2) or (7) and a host (3) and describes the communication for opening-final activating and for inclusion and activating in DOMAIN mode. Figure 13 shows communication between remote control (1) and a host (4), giving the flow of messages between the two. Figure 14 shows how the loading of access authorisation is established using the DOMAIN mode. Lastly, figure 15 shows how SCAN mode is performed in a remote control (1) communication with a host (2) or (3).

## Claims

1. **A REMOTE CONTROL SYSTEM FOR ACCESS MANAGEMENT AND CONTROL,** particularly applicable to remote opening and closing of doors of garages, dwellings and automobiles, which has one or more controls (1) that communicate with one or more receiving hosts (2, 3, 4) that govern the opening/closing of said doors or accesses; **characterised in that** each of said controls (1) has a single pushbutton (5) that acts in such a way that depending on a number and/or duration of the presses made on said pushbutton (5) and/or a proximity of the control (1) to hosts (2, 3, 4), the control (1) can control and be controlled by any number of receiving hosts (2, 3, 4), according to pre-established modes; being a communication between each control (1) and the receiver host (2, 3, 4) a bi-directional data communication that includes a secret coding, (stored in both the remote controls and in the receiving hosts, by means of an algorithm for codifying which allows useful information for diverse functions to be transmitted, so that authorisation for use in the system and the inviolability of the aforementioned communication are assured by means of said algorithm, which is a Referential Positioning Dynamic Algorithm, called RPDA, specially developed for this system, which allows information packages of any size to be protected and which consists of a pre-coded preamble that heads all communication messages and requires a satisfactory reply by the communicating element at the end of the entire message flow.

2. **A REMOTE CONTROL SYSTEM FOR ACCESS MANAGEMENT AND CONTROL**, according to claim 1, **characterised in that** said bi-directional data communication is preferably performed via radio and a question-answer and evaluation process is carried out by means of an exchange of passwords, in which control (1) receives a code from the receiving host (2, 3, 4) and evaluates it according to the aforementioned algorithm; the corresponding evaluation being sent to said host (2, 3, 4) which produces a verification in said host (2, 3, 4), as well as receiving information for established functions, so that according to whether said verification is valid or not, access is permitted or refused and the aforementioned functions executed or not; so that the use of the system is assured solely by authorised users; and in which:
- said number of presses consists of a single press capable of discerning the receiving host (2, 3, 4) to act by means of establishing the energy level of the transmission depending on the distance of the action on the different opening devices; where by means of this functioning mode, control (1) transmits a signal for action on all the receivers within its range and, once these have received said signal, they send coded information of their energy level and identification; by means of which, the control determines the device on which it has to act determined by the maximum energy level or minimum distance for action, in such a way that this exchange of information of the energy level precedes all the bi-directional communication for action on an opening device between the control (1) and the receiving host (2, 3, 4) of sad opening device; there existing an action mode derived from a control to be activated by a deferred DOMAIN activation, by loading the access authorisation in control (1) by means of DOMAIN Mode previously executed in a receiving host (2, 3, 4) with pre-established authorisation on the host acted by said mode; there existing two automatic modes of action for the opening device called SCAN mode and PROXY mode; the latter being particularly applicable to the access of vehicles.

3. **A REMOTE CONTROL SYSTEM FOR ACCESS MANAGEMENT AND CONTROL**, according to claim 1, **characterised in that** said receiving hosts are of three types: a first type called main-host (2), a second type called mirror-host (3) and a third type called vehicle-host (4); the ones of the first type (2) being main hosts that carry out the control, management and government of accesses and the control and management of the controls (1) in an autonomous and centralised manner; making possible the inclusion or removal by activating or not each control (1) either directly or by a mode called DOMAIN or remote inclusion that consists of leaving certain remote controls (1) ready to be able to accede or not to a particularly remote access from the location of the system; with functions for establishing user contexts such as time periods for permitted/forbidden access for each control (1), voice messaging, data self-printing, acoustic warnings about access status, the status of the control (1) battery and the action mode of the control (1), together with a privacy condition consisting of optionally disabling all the remaining remote controls (1) for a particular access once a particular control (1) has acceded to said particular access; with means for acting in hands free mode for the controls (1) called SCAN mode consisting of that, once this mode has been activated and/or programmed by means of the pushbutton (5) of the control (1), the corresponding access automatically opens when the control (1) physically approaches said access; and also with means for acting by another hands free mode for the controls (1) called PROXY mode consisting of that, once said mode has been activated and/or programmed by means of the pushbutton (5) of the control (1), the corresponding access automatically closes when the remote control (1) physically moves away from said access when leaving it; these main hosts (2) also accomplishing an exchange information in a bi-directional manner, generally wireless, with the second type hosts (3); while these second type hosts (3) are auxiliary hosts that can govern certain accesses but by means of the control and management of a host of the first type (2); both of the two types of hosts mentioned (2, 3) being acted on in the same way by the controls (1) and have means for exchanging encoded data that allows acting on an opening device; the third type hosts (4) being hosts whose governed element corresponds to accesses to an automobile vehicle (6); while the controls belonging to a single type, are called clever-control (1), they are able to be used with the three aforementioned types of host (2, 3, 4) and they can be personalised and have a key-ring type configuration.

4. **A REMOTE CONTROL SYSTEM FOR ACCESS MANAGEMENT AND CONTROL,** according to claim 3, **characterised in that** the system has an option that includes a visual control host (7), which has at least one PC type computer (8) provided with software (9) for the visual management of accesses and a specific interface unit for this application called RPDA-DATA-LINK (10); this control-host having a similar functioning to that of a main-host (2) with the exception that it allows visual control of all the accesses, but it cannot govern these accesses directly, these accesses being governed in this option of system by respective mirror-host (3) which communicate bi-directionally with the control-host (7) via the aforementioned interface (10), as well as communicate bi-directionally with the corresponding clever-controls (1); this option of the system being particularly suitable when great centralisation is required in the management of accesses such as in the case of managing of accesses to offices, hotels or others.

5. **A REMOTE CONTROL SYSTEM FOR ACCESS MANAGEMENT AND CONTROL,** according to claim 3, **characterised in that** the communication between the clever-control (1) and the main-host (2) for acting on the opening device comprises the recognition of said communication, with a previous verification of the operating mode, which contains a clever-control (1) serial number, its operating mode and the status of its battery (56) and, as a first step, to recognise whether the clever-control (1) is activated in the main-host (2) or not, and if it is, it verifies whether it comes within the user context for said main-host (2) and, if it is, starts to evaluate said clever-control (1) generating a seed number of sixty-four bits and a SCAN mode trigger in said main-host (2); this number being sent from the main-host (2) to the clever-control (1) and this number being evaluated by the clever-control (1) using the RPDA algorithm, and sending the encoded information to the main-host (2) and being checked by it using the RPDA algorithm, and in the case of this information being valid, action is permitted on the corresponding opening device and recognition of it is communicated by the main-host (2) to the clever-control (1); both units going into the idle state, in this case, and in the case of the aforementioned encoded information not being valid, action on said opening device is denied.

6. **A REMOTE CONTROL SYSTEM FOR ACCESS MANAGEMENT AND CONTROL,** according to claim 3, **characterised in that** the communication between the clever-control (1) and the mirror-host (3), for acting on the opening device with, in this case, the mirror-host (3) communicating with a main-host (2) or a control-host (7), comprises recognition of this communication, with a previous verification of the operating mode, from the clever-control (1) to the mirror-host (3), containing a clever-control (1) serial number, its operating mode and the status of its battery (56) and, as a first step, sending from the mirror host (3) to the main host (2) or control host (7), the identification of the mirror-host (2) and that of the clever-control (1) together with a seed number of sixty-four bits, being recognised whether said identification of the clever-control (1) is activated or not in the main-host (2) or control-host (7) for said mirror-host (3) and, if it is, verify if it is within the user context in said main-host (2) or control-host (7) for said mirror-host (3) and, if it is, evaluate said seed number of sixty-four bits according to the RPDA algorithm for the main-host (2) or control host (7) and sending the coded information to the mirror host (3) and being checked by it by means of the RPDA algorithm, and in the case it is valid, it generates a new seed number of sixty-four bits in said mirror-host (3) and a SCAN mode trigger which is sent from the mirror-host (3) to the clever-control (1) where said number is evaluated by the clever-control (1) using the RPDA algorithm; the corresponding encoded information being sent to the mirror-host (3) where it is checked by it, by means of the RPDA algorithm and, in the case of said information being valid, action is permitted on the corresponding opening device and recognition of it communicated from the mirror-host (3) to the clever-control (1), both units going into the idle state in this case, and in the case of the aforementioned encoded information not being valid, action on said opening device is denied.

7. **A REMOTE CONTROL SYSTEM FOR ACCESS MANAGEMENT AND CONTROL**, according to claim 3 or 4, **characterised in that** action on a host (2, 3, 4) derived from a remote control (1) to be activated in this host (2, 3, 4) by DOMAIN mode or deferred activation, is carried out by storing pre-determined secret information in a particular control (1) by means of a main-host (2) or control-host (7) and a host control (1) activated in it and said main-host (2) or control-host (7) shares with the aforementioned host (2, 3, 4), that activates the opening device and in which the control (1) is activated in deferred mode, pre-established secret information in a password, a domain mask being established that permits remote or deferred activation in DOMAIN mode of a control in a host, a domain having been previously personalised for the main-hosts (2) or mirror-hosts (3) that belong to a particular DOMAIN system by means of a domain name and a main password;
- in this case, the communication between the clever-control (1) and the main-host (2) comprises a recognition of this communication, with previous verification of the operating mode, that contains a clever-control (1) serial number, the operating mode and the status of its battery (56) and, in a first step, recognises whether the clever-control (1) is activated or not in the main-host (2), if it is, activation is performed as stated in claim 5, and if it is not, a verification is made to establish whether it is possible to activate it using the DOMAIN system; communicating from said main-host (2) to the clever-control (1) to which it belongs, protected in the form of a domain mask, and verifying whether said domain is loaded in the clever-control (1), and if not being so, both units going into the idle state and, the context restrictions that determine authorisation for use, being sent from the clever-control (1) to the main-host (2), and this information being checked by the main-host (2) and if said restrictions are not being complied with, both units (1 and 2) go into the idle state and, in case of fulfilling said restrictions the evaluation of said clever-control (1) begins, a seed number of sixty-four bits and a SCAN mode trigger being generated in said main host (2), said number being sent from the main-host (2) to the control-clever (1), and said number being evaluated according to the RPDA algorithm by the clever-control (1) and sending the coded information to the main host (2), and being checked by it by means of the RPDA algorithm, and in case of not being valid, units (1 and 2) go into an idle state, and in the case of the activation of the clever-control (1) is permitted in the main-host (2) and later action on the corresponding opening device together with recognition of it and of the previous activation by the DOMAIN method communicated from the main-host (2) to the clever-control (1); this last step is carried out after verifying whether the clever-control (1) comes within the user context for said main-host (2) and, if it is not within this context, action on the opening device is not permitted, even when said activation recognition having being produced by the DOMAIN method;
- in which case communication between the clever control (1) and the mirror-host (3), in this case, the mirror-host (3) communicating with the main-host (2) or control-host (7) comprises recognition of said communication, with a previous verification of the operating mode, that contains a clever-control (1) serial number, the operating mode and the status of its battery (56) and, having previously sent, as a first step, the identification of the mirror-host (3) and that of the clever-control (1) together with a seed number of sixty-four bits from the mirror-host (3) to the main-host (2) or control-host (7), verifying whether the clever-control (1) is activated or not in the main-host (2) or control-host (7); if it is not, a verification is made of whether it is possible to activate it by means of the DOMAIN system, the evaluation of this number is carried out and sent to the mirror-host (3) from the main-host (2) or control-host (7) using the RPDA algorithm together with the domain to which this mirror-host (3) belongs, protected in the form of a domain mask, and also the time in real time, a new seed number of sixty-four bits generated in said main-host (2) or control-host (7) and a SCAN mode trigger; all this information being checked in the mirror-host (3) by means the RPDA algorithm; and, if it is not correct, the hosts [(3) and (2 or 7)] go into the idle state and if it is correct the domain protected by means of the domain mask is communicated from the mirror-host (3) to the clever-control (1) where it is verified whether said domain is edited in the clever-control (1) and, if it is not, the hosts [(3) and (2 or 7)] go into the idle state and, being so, the context restrictions that determine the use are sent from the clever-control (1) to the mirror-host (3), where this information is checked by the mirror host (3) and if these restrictions are not complied with, the hosts [(3) and (2 or 7)] go into the idle state, and if they are, an evaluation begins of said clever-control (1), a new seed number of sixty-four bits and a SCAN mode trigger being generated in the mirror-host (3), and said number being sent from the mirror-host (3), to the clever-control (1) and said number being evaluated using the RPDA algorithm and sending the coded information to the mirror-host (3), where it is checked by it using the RPDA algorithm, and if this information is not valid, the hosts [(3) and (2 or 7)] go into the idle state and, if it is valid, a new evaluation is performed of the information communicated in the mirror-host (3) using the RPDA algorithm; and sending it together with the context restrictions that determine authorisation of use to the main-host (2) or control-host (7) where this information is evaluated using the RPDA algorithm and, if this information is not correct, the hosts [(3) and (2 or 7)] go into the idle state and, if it is correct, the activation of the clever-control (1) is permitted in the main-host (2) or control-host (7) for said mirror-host (3) and later action on the opening device in said mirror-host (3) and recognition of it and of the previous activation using the DOMAIN method communicated from the mirror-host (3) to the clever-control (1); this last step being performed after verifying whether the clever-control (1) comes within the user context for said mirror-host (3) in the main-host (2) or control-host (7), and if it does not come within said context, said action on the opening device is not permitted, even though recognition of activation using the DOMAIN method occurs.

8. **A REMOTE CONTROL SYSTEM FOR ACCESS MANAGEMENT AND CONTROL,** according to claim 7, **characterised in that** in this DOMAIN mode, the allotting of domains permitted to a clever-control (1) is carried out by means of the main-host (2) or control-host (7) and a host clever-control (1) and activated in these hosts (2 or 7), and having all the units, that is to say those for activation or action, (2, 3, 4) and those allotted by the DOMAIN main-host (2) or control-host (7), have the same password if they intervene in a domain system whether through said activation or action or through said allotting; so that in this allotting of permitted DOMAINS to a clever-control (1) carried out in the main-host (2) or control-host (7) going into a mode for loading authorisation of accesses by a domain system, as a first step, it is located whether the clever-control (1) is activated or not in said main-host (2) or control-host (7), and if it is, the domains authorised and the context restrictions are entered using a keyboard (20) or the computer (8), and if it is not, the serial number of the clever-control (1) and the user name are also entered using the keyboard (20) or the computer (8) and by optionally pressing the pushbutton (5) of the clever-control (1) its serial number, the operating mode and status of the battery of the main-host (2) or control-host (7) are communicated, and a check is made of the latter to find out whether it is an operating mode for acting once on the pushbutton (5) and, if it is, a verification is made of whether the serial number of the clever-control (1) is the same as the serial number entered and/or activated or not in said main-host (2) or control-host (7) and, if neither this check of the operating mode nor the serial number verification is correct, an optional action is performed once more on pushbutton (5) of the clever-control (1) and, if the two conditions are correct, the authorised domain mask and the context restrictions for the clever-control (1) are communicated by the main-host (2) or control-host (7), together with the serial number of the host clever-control (1) and activated in the allotting hosts (2 or 7) as a necessary condition for this communication, which is stored, and remote control (1) and hosts (2 or 7) going into the idle state.

9. **A REMOTE CONTROL SYSTEM FOR ACCESS MANAGEMENT AND CONTROL,** according to claim 3 or 4, **characterised in that** a personalisation of the mirror-host (3) is carried out in the link between the mirror-host (3) and a main-host (2) or control-host (7) that allows entry into the main-host (2) or control-host (7) in link mode via the menu or software respectively and editing in them the serial number of the mirror-host (3), name of the mirror-host (3), domain name of the mirror-host (3), if there is one, it is the name whose mask, with the coding agreeing with the domain name and password of the main-host (2) or control-host (7) to which it is linked, passes to the control when the access requested has not been recognised, starting the evaluation using the DOMAIN mode, activation by this mode being denied in the mirror-host (3) if a domain name is not specified, the operating mode of the mirror-host (3) number of presses on the pushbutton (5) of the clever-control (1) to which acts and the duration of these presses, the SCAN mode trigger mode and SCAN mode of signal refused; the mirror-host (3) is thus being left in permitted link mode by means of the activation button (30) of said mirror-host (3); the serial number of the main-host (2) or control-host (7), the operating mode of the mirror-host (3) and the SCAN mode signal refused being communicated together with a new seed number of sixty-four bits being communicated from the main-host (2) or control-host (7) to the mirror-host (3) and this serial number, operating mode and SCAN mode signal refused are stored, and an evaluation being made of this coded information in the mirror-host (3), using the RPDA algorithm, and this is communicated to the main-host (2) or control-host (7), and this evaluation being checked by this main-host (2) or control-host (7), and it is valid, the activation of said mirror-host (3) in the main-host (2) or control-host (7) is permitted and recognition of this is communicated from said main-host (2) or control-host (7) to said mirror-host (3), the units going into an idle state in this case and, if the aforementioned coded information is not valid, said activation of the mirror-host (3) is refused.

10. **A REMOTE CONTROL SYSTEM FOR ACCESS MANAGEMENT AND CONTROL,** according to claim 3, **characterised in that** by using the SCAN mode, the activation of this mode in the clever-control (1) can be activated by means of its pushbutton (5) or activated directly in said clever-control (1) by acting on the main-host (2) or mirror-host (3), in this case, the hands free opening being performed from here onwards without limit to any action on the corresponding opening device; this SCAN mode consisting of a permanent and automatic attempt of the clever-control (1) to communicate the corresponding opening devices to the main-host (2) or mirror-host (3); as a first step, an identification number of the clever-control (1) and a SCAN mode message are sent from the aforementioned clever-control (1) to the main-host (2) or mirror-host (3) with the option of communicating recognition of this communication plus a serial number for this from the main-host (2) or mirror-host (3) to the clever-control (1); this communication being detected by the clever-control (1) and a check is made of whether these serial numbers of the main-host (2) or mirror-host (3) are new or not in the clever-control (1), and if so, a function being executed to request short-range opening in the clever-control (1) and, if this is satisfactory, said serial number of the main-host (2) or mirror-host (3) is stored in the clever-control (1), and the expiry time of the SCAN mode is re-set, the clever-control (1) going into an idle state and sending the identification and SCAN mode message again, in such a way that in either of the above cases, if the aforementioned recognition is not detected, or a new serial number of the main-host (2) or mirror-host (3) is not given in the clever-control (1), or the execution of the request for short-range opening is not satisfactory, the clever-control (1) continues to communicate its identification number and SCAN mode message to the main-host (2) or mirror-host (3) in the case of the SCAN mode time not having expired, and in the case of the SCAN mode time having expired, it switches off and the control (1) and hosts (2 or 3) go into the idle state.

11. **A REMOTE CONTROL SYSTEM FOR ACCESS MANAGEMENT AND CONTROL,** according to claim 3, **characterised in that** the host of the third type vehicle-host (4) comprises a control unit (34) based on a micro-controller connected to a radio-frequency block (35) provided with an antenna (36), together with a relay control block (37) that acts on a relay (38) for opening the doors of a vehicle (6), on a relay (39) for closing these doors, on a relay (40) for opening/closing the boot of said vehicle and on a relay (41) for opening/closing an auxiliary element, preferably via a standard actuator or conventional remote control (76) for the vehicle acting on its conventional pushbuttons for opening doors (77), closing doors (78), on a pushbutton for opening/closing the boot (79) and on its conventional pushbuttons for opening/closing an auxiliary element (80) respectively via the aforementioned relays (38 to 41) of said control block (37); the aforementioned control unit (34) also being connected to a memory block (42), with an action button (43), with a RESET/LEARNING unit (44), with a remote action interface (45) and with an acoustic warning device (46); the aforementioned RESET/LEARNING unit (44) receiving a signal (47) indicating the status of the vehicle ignition key position, while the control unit (34) receives a signal (48) indicating the status of the aforementioned relays (38 to 41); the supply for the corresponding circuits in this vehicle-host (4) being carried out by means of a supply and voltage regulation block (49) which connects with the battery (50) of the aforementioned vehicle (6).

12. **A REMOTE CONTROL SYSTEM FOR ACCESS MANAGEMENT AND CONTROL,** according to claim 3 or 11, **characterised in that** the communication between the vehicle-host (4) and the clever-control (1) comprises as a first step, the sending of a serial number from the clever-control (1) to the vehicle-host (4), its operating mode and the status of its battery for this clever-control (1); the vehicle-host (4) verifying whether the operating mode is a permitted mode and, if it is not, the units go into the idle state, and if it is, it verifies whether said serial number is activated in the vehicle-host (4) and, if it is not, the units going into the idle state, and if it is, the vehicle-host (4) communicates a seed number of sixty-four bits and a PROXY mode trigger to the clever-control (1), said clever-control (1) making an evaluation of said information using the RPDA algorithm and sending it to the vehicle-host (4), said vehicle-host (4) checking the evaluation using the RPDA algorithm, and if it is not valid, the units go into the idle state, and in case of being valid, the function corresponding to this operating mode is executed and recognition of said execution communicated by the vehicle-host (4) to the clever-control (1).

13. **A REMOTE CONTROL SYSTEM FOR ACCESS MANAGEMENT AND CONTROL**, according to claim 11, **characterised in that** it comprises the activation of said clever-control (1) in the control unit (34) of the vehicle-host (4), thus permitting access via the introduction of the key in the start-up position of the corresponding vehicle and then pressing the action button (43) of the RESET/LEARNING unit (44) of the vehicle-host (4), or by means of the remote action interface (45), for a particular period of time after which the acoustic warning device (46) sounds; in this moment, the button (43) being released and the vehicle-host unit (4) going into learning mode and taking up a certain period of time to activate said clever-control (1); meanwhile, in order to de-activate or remove all the clever-controls (1) associated with the vehicle-host (4), the key of the vehicle is introduced in the start-up position and the aforementioned button (43) is pressed, or said interface (45) is acted upon until a particular acoustic signal is heard, said button (43) being released when the particular acoustic signal is heard; a certain period of time being then available for pressing a clever-control (1) which is the only one that remains activated in the system, the remaining being de-activated, if this clever-control (1) is not entered, the others will not be deleted; meanwhile, the programming of the control unit (34) of the vehicle-host (4) is performed by introducing the key of the vehicle in the star-up position and pressing the aforementioned button (43) or acting on said interface (45) until the particular acoustic signal is heard, then taking a particular maximum period of time for establishing the presses for a first relay (38) or command, normally the one for opening doors, at a middle distance, the acoustic signal then sounding to confirm passing on to the establishment of presses for a second relay (39) normally the one for closing doors, also taking up a particular time and the acoustic signal then sounding to confirm passing on to the establishment of the presses for the following relay and so on successively until all four relays (38 to 41) have been configured, a particular confirmation signal indicating the end of the relay configuration being heard in the same manner as that for the completion of any of the previous steps when leaving the intermediate particular periods of time; and by making a short press on the pushbutton (5) of the clever-control (1) within a maximum particular period of time, the PROXY mode of the clever-control (1) is established which closes all the relays when the clever-control (1) moves away from the vehicle; and by making a quick press on the pushbutton (5) of the clever-control (1) within a particular period of time, a permitted operating mode is established which introduces a long pressing at the end of the previous events that is useful in long distance situations, the programming process ending with a confirmation acoustic signal.

14. **A REMOTE CONTROL SYSTEM FOR ACCESS MANAGEMENT AND CONTROL,** according to claims 3 and 12, **characterised in that** once said PROXY mode has been activated, it comprises a communication from the clever-control (1) to the vehicle-host (4) of a serial number of said clever-control (1) and a PROXY mode message, this communication being received by the vehicle-host (4) which has the option of sending recognition of this communication from the vehicle-host (4) to said clever-control (1); so that if said recognition is received, the clever-control (1) goes into an idle state until the following message in PROXY mode is sent by the clever-control (1) to the vehicle-host (4), occurring in a continuous mode if said recognition occurs; and if said recognition is not received, the function for closing the doors of the vehicle is executed, the clever-control (1) and vehicle-host (4) units going into the idle state.
